# FASCICULE DE BREVET EUROPEEN

(11) **EP 2 360 093 B1**
(45) Date de publication et mention de la délivrance du brevet: **01.05.2013**
(21) Numéro de dépôt: 11001211.9
(22) Date de dépôt: 15.02.2011
(51) Int. Cl.: B64C 25/10, B64C 25/66

(54) **AERONEF A VOILURE TOURNANTE MUNI D'UN ATTERRISSEUR D'URGENCE**
Hubschrauber mit Notfahrwerk
Helicopter equipped with emergency landing gear

(30) Priorité: 24.02.2010 FR 1000752
(43) Date de publication de la demande: 24.08.2011
(73) Titulaire: EUROCOPTER, 13725 Marignane Cédex (FR)
(72) Inventeur: Prud'homme-Lacroix, Pierre, 13127 Vitrolles (FR); Dubois, Robert, 13090 Aix En Provence (FR)
(74) Mandataire: Pouillot, Laurent Pierre Paul

(56) Documents cités:
- EP-A1- 0 324 683
- EP-A2- 0 049 964
- US-A- 2 454 611
- US-A- 2 927 747

## Description

La présente invention concerne un aéronef à voilure tournante muni d'un atterrisseur d'urgence. L'invention se situe notamment dans le domaine des trains d'atterrissage d'aéronefs à voilure tournante, et plus particulièrement des giravions.

Classiquement, un aéronef comporte un train d'atterrissage à l'aide duquel il repose sur le sol. Par exemple, le train d'atterrissage est pourvu de trois ou quatre atterrisseurs à roues qui constituent un polygone de sustentation de l'aéronef au sol. On connaît aussi des atterrisseurs munis de patins.

Ces atterrisseurs peuvent être escamotables pour optimiser la traînée aérodynamique de l'aéronef. En effet, on replie à l'intérieur du fuselage les éléments de l'aéronef les plus proéminents, et notamment les trains d'atterrissage escamotables. Plus précisément, on escamote chaque atterrisseur en vol dans un compartiment dénommé classiquement « case de train », pour le déployer au moment requis lors de l'atterrissage

On rappelle qu'un train d'atterrissage peut comporter d'une part des atterrisseurs principaux proches du centre de gravité afin de supporter une grande partie de la masse de l'aéronef et, d'autre part des atterrisseurs auxiliaires agencés à l'avant ou à l'arrière de cet aéronef pour assurer la stabilité et participer à la conduite de l'aéronef au sol. A ce propos, un atterrisseur agencé à l'avant d'un aéronef est parfois dénommé « train d'atterrissage avant », alors qu'un atterrisseur agencé à l'arrière d'un aéronef est parfois dénommé « train d'atterrissage arrière ».

Un atterrisseur auxiliaire est avantageusement orientable contrairement à un atterrisseur principal.

Les atterrisseurs principaux ou auxiliaires escamotables présentent donc un intérêt d'un point de vue aérodynamique. Toutefois, à l'instar de n'importe quel système, ces atterrisseurs sont susceptibles de tomber en panne, et par exemple de rester bloqués dans leur case de train en vol à l'intérieur du fuselage en cas de panne de leur système de déploiement, que cette panne soit d'ordre mécanique, électrique ou encore hydraulique.

Dès lors, au moins un atterrisseur d'un aéronef peut rester bloqué dans sa case de train, bien que la probabilité d'avoir plusieurs atterrisseurs bloqués simultanément soit faible. En cas de pannes, on a recours à des moyens palliatifs plus ou moins efficaces.

Selon une première méthode applicable sur un atterrisseur muni d'un actionneur de sortie hydraulique, on sort manuellement l'atterrisseur en panne à l'aide par exemple d'une pompe manuelle ou d'une pompe électrique en cas de panne de la génération hydraulique.

Selon une deuxième méthode applicable sur un aéronef à voilure tournante de type giravion faisant un vol stationnaire à proximité du sol, un opérateur pourrait être tenté de sortir l'atterrisseur depuis l'extérieur. On comprend que cette manipulation est hasardeuse voire dangereuse. Cette manipulation n'est donc pas préconisée par, les constructeurs de giravion.

Selon une troisième méthode applicable sur un aéronef à voilure tournante de type giravion faisant un vol stationnaire à proximité du sol, un opérateur installe un outillage sur l'aire d'atterrissage, le pilote faisant reposer son aéronef à voilure tournante sur l'outillage au moment de l'atterrissage. Il convient donc de posséder un outillage adapté. Cependant, on comprend que l'atterrissage est compliqué car le pilote doit positionner son aéronef avec précision sur l'outillage.

Selon une quatrième méthode, le pilote atterrit avec au moins un atterrisseur rentré dans le fuselage. Cette méthode entraîne fatalement des dégâts sur le fuselage et génère de fait des coûts de réparation susceptibles d'être onéreux, y compris sur un giravion de type hélicoptère apte à se poser à une vitesse extrêmement réduite.

Selon une cinquième méthode applicable avec un aéronef à voilure tournante de type giravion, tel qu'un hélicoptère notamment, le pilote atterrit dans une fosse à graviers dédiée à cet effet, ladite fosse permettant de poser l'aéronef sur une surface meuble qui épouse au mieux la géométrie du fuselage pour limiter les dégâts occasionnés par l'atterrissage.

On comprend qu'en cas de panne d'un atterrisseur, il est difficile d'atterrir sans endommager l'aéronef et/ou sans mettre en danger un intervenant extérieur.

La présente invention a alors pour objet de proposer un aéronef à voilure tournante muni d'un dispositif permettant de faciliter l'atterrissage de l'aéronef à voilure tournante en cas de panne d'au moins un atterrisseur.

On note qu'il est courant d'utiliser une béquille rétractable sur une motocyclette afin de permettre le stationnement de cette motocyclette. Cet enseignement est éloigné du domaine technique de l'invention dans la mesure où la béquille d'une motocyclette n'a pas pour but de compenser un défaut de déploiement d'une roue d'un atterrisseur. La béquille est indispensable au stationnement de la motocyclette en fonctionnement normal, et n'est de fait pas utilisée en cas de panne d'un atterrisseur.

De même, le document GB 1351739 divulgue un dispositif permettant de stabiliser une remorque lors d'opérations de chargement ou de déchargement, et un tracteur lors de travaux prédéterminés. L'enseignement de ce document GB 1351739 est donc éloigné du domaine technique de l'invention, les moyens décrits n'ayant pas pour fonction de remplacer un atterrisseur bloqué dans une case de train.

De même, l'état de la technique inclut de plus le document US 2776148 A, le document EP 0324683 A1, le document US 2454611 A, le document US 2927747 A et le document EP 0049964 A2.

Le document US 2776148 A a pour objet une station d'accueil d'une remorque, plus précisément une station supportant une portion avant de remorque.

Le document EP 0324683 A1a pour objet des moyens de stabilité d'un hélicoptère à trains d'atterrissages tricycles utilisés en complément d'atterrisseurs pour stabiliser ledit hélicoptère sur une plateforme mouvante.

Le document US 2454611 A vise un train d'atterrissage rétractable.

Le document US 2927747 A présente un train d'atterrissage pour atterrir sur un terrain en pente.

Le document EP 0049964 A2 présente un moyen pour supporter un hélicoptère sur une plateforme.

Selon l'invention, un aéronef à voilure tournante est muni d'au moins un atterrisseur basique escamotable dans une case de train, plus particulièrement un aéronef à atterrissage vertical ou sensiblement vertical apte à se poser avec une vitesse d'avancement extrêmement faible voire nulle tel qu'un giravion de type hélicoptère.

Cet aéronef comprend de plus un atterrisseur d'urgence embarqué pour pallier une panne d'un atterrisseur basique d'un aéronef à voilure tournante, en substitution dudit atterrisseur basique. L'atterrisseur d'urgence comporte un organe principal s'étendant d'une première extrémité à une deuxième extrémité, l'atterrisseur d'urgence ayant un moyen de déploiement de l'organe principal pour déployer cet organe principal hors d'un logement afin de suppléer un atterrisseur basique d'un aéronef à voilure tournante en cas de panne, l'atterrisseur d'urgence étant pourvu d'un moyen de maintien en position pour bloquer l'organe principal lorsque cet organe principal est déployé hors du logement.

Le moyen de déploiement comporte un organe de déploiement élastique, tel qu'un ressort, agissant sur l'organe principal pour déployer cet organe principal hors d'un logement afin de suppléer un atterrisseur basique d'un aéronef à voilure tournante en cas de panne.

On note que pour limiter les risques d'endommagement de chaque atterrisseur d'urgence, le pilote de l'aéronef à voilure tournante fait en sorte d'avoir la vitesse d'avancement la plus faible possible voire une vitesse d'avancement nulle et une vitesse ascensionnelle maîtrisée, ces vitesses d'avancement et ascensionnelle étant spécifiées dans le manuel de vol par exemple.

On comprend que l'on appelle « atterrisseur basique » par commodité l'atterrisseur d'un train d'atterrissage d'un aéronef à voilure tournante. L'atterrisseur dénommé « atterrisseur basique » est indifféremment soit un atterrisseur principal soit un atterrisseur auxiliaire d'un train d'atterrissage, soit un atterrisseur à patin rétractable.

Le terme « basique » utilisé est à opposer au terme « d'urgence » attribué à l'atterrisseur escamotable selon l'invention, l'atterrisseur d'urgence étant déployé à la place de l'atterrisseur basique en cas de panne de cet atterrisseur basique.

De plus, l'expression « déployer cet organe principal hors d'un logement » signifie notamment que l'on fait sortir la deuxième extrémité de l'organe principal du logement pour la faire saillir à l'extérieur du fuselage de l'aéronef à voilure tournante.

Ainsi, dans un mode de fonctionnement normal, c'est-à-dire lorsque l'atterrisseur basique n'est pas en panne, un pilote déploie l'atterrisseur basique pour atterrir sur le sol.

Par contre, un mode de fonctionnement de secours, à savoir lorsque l'atterrisseur basique est en panne et ne peut être totalement déployé, on actionne le moyen de déploiement de l'atterrisseur d'urgence pour le déployer en faisant notamment sortir l'organe principal au moins partiellement du logement dans lequel cet organe principal était escamoté. Par suite, on actionne le moyen de maintien en position afin que l'organe principal ne soit pas escamoté sous l'effet des efforts exercés sur cet organe lors de l'atterrissage.

Le déploiement peut être réalisé de manière électrique ou encore via l'intervention d'un opérateur, cet opérateur pouvant être un occupant de l'aéronef à voilure tournante.

L'invention a donc bien pour objet un aéronef muni d'un atterrisseur de secours venant en supplément d'un atterrisseur basique usuel pour pallier une déficience de l'atterrisseur basique correspondant en panne. L'atterrisseur d'urgence fournit en effet un appui d'urgence qui remplace l'appui normalement fourni par l'atterrisseur basique défectueux.

Par ailleurs, on note que le dimensionnement de l'atterrisseur d'urgence et notamment de l'organe principal prend en compte les points extrêmes du diagramme masse/centrage de l'aéronef à voilure tournante, à savoir les points correspondants à la masse la plus importante et à la masse la plus faible ainsi que les excursions possibles longitudinales et latérales du centre de gravité, afin de garantir que le plan horizontal de l'appareil formé par le polygone de sustentation comprenant l'appui d'urgence fourni par l'atterrisseur d'urgence soit toujours conforme aux directives du manuel de vol en terme de permission d'atterrissage sur des terrains en pente pour assurer la stabilité au sol de l'aéronef à voilure tournante.

L'atterrisseur d'urgence de l'aéronef peut de plus comporter une ou plusieurs des caractéristiques additionnelles qui suivent.

Par exemple, l'organe principal est un tube principal.

En outre, l'organe principal peut comporter un organe de contact avec le sol, prolongeant la deuxième extrémité de cet organe principal.

Cet organe de contact avec le sol peut être en élastomère pour avoir une raideur du même ordre de grandeur que la raideur d'un atterrisseur basique classique, à savoir entre 5 et 500 daN/mm (décaNewton par millimètre) pour un hélicoptère suivant la classe d'appareil.

Selon un aspect de l'invention, l'organe principal est pourvu d'un moyen d'amortissement, liant par exemple la deuxième extrémité et l'organe de contact.

L'organe de contact peut par exemple être un organe rigide prolongeant la deuxième extrémité via un moyen d'amortissement de type ressort ou une couche d'élastomère pour conférer à l'ensemble comprenant le moyen d'amortissement et l'organe de contact une raideur du même ordre de grandeur que la raideur d'un atterrisseur basique classique.

De plus, l'organe de contact peut être muni d'une spatule pour maximiser une surface de contact de l'atterrisseur d'urgence avec le sol.

Cette spatule autorise alors éventuellement une légère vitesse d'avancement à l'aéronef à voilure tournante qui fera glisser cet aéronef sur une très courte distance sans que l'atterrisseur d'urgence ne pénètre dans le sol et ne bloque cet aéronef. La spatule peut en outre être un ski apte à glisser sur une surface neigeuse si nécessaire.

Cette spatule peut aussi servir de capot aérodynamique disposé dans la continuité du fuselage de l'aéronef à voilure tournante lorsque l'atterrisseur d'urgence est escamoté dans un logement à l'intérieur de l'aéronef à voilure tournante.

Selon une autre variante, l'organe de contact peut être muni d'une roue.

De plus, le moyen de déploiement comporte éventuellement une goupille, à savoir une tige mobile par exemple. Cette goupille coopère avec l'organe principal pour maintenir cet organe principal dans un logement durant un mode de fonctionnement normal et pour autoriser le déploiement de cet organe principal hors du logement durant un mode fonctionnement de secours afin de suppléer un atterrisseur basique d'un aéronef à voilure tournante en cas de panne.

Selon un aspect, on enlève la goupille ce qui permet à l'organe de déploiement élastique d'exercer un effort sur l'organe principal afin que cet organe principal, et notamment l'organe de contact de cet organe principal, sorte du logement contenant l'atterrisseur d'urgence.

Selon une variante, le moyen de maintien comporte la goupille du moyen de déploiement, cette goupille coopérant de plus avec l'organe principal pour maintenir cet organe principal hors d'un logement à la suite du déploiement.

Suite au déploiement, l'opérateur dispose la goupille dans un réceptacle prévu à cet effet pour bloquer l'organe principal dans une position prédéterminée.

Selon une variante automatisée, l'atterrisseur d'urgence comporte un moyen de déplacement du moyen de déploiement et un organe de commande du moyen de déplacement, l'organe de commande ordonnant au moyen de déplacement de déplacer le moyen de déploiement pour le déploiement de l'organe principal hors d'un logement.

Par exemple, le moyen de déplacement est un moyen électromagnétique apte à engendrer une translation d'une goupille du moyen de déploiement. Conformément à un autre exemple, la goupille possédant une portion filetée, le moyen de déplacement est un moteur engrenant ladite portion filetée.

Le dispositif de manoeuvre de l'atterrisseur d'urgence peut être passif. Ainsi, l'organe de commande peut être un bouton manoeuvrable par un pilote.

Toutefois, le dispositif peut aussi être actif. L'organe de commande est alors un processeur relié à des capteurs signalant le blocage d'un atterrisseur basique, par exemple un capteur de position indiquant que l'atterrisseur basique n'est pas déployé. En fonction des informations reçues, l'organe de commande requiert alors le déploiement de l'atterrisseur d'urgence.

On note que l'organe de commande peut aussi être connecté au système avionique de l'aéronef à voilure tournante pour ordonner un déploiement plus ou moins important de l'organe principal, en fonction d'informations avioniques par exemple relative à la masse de l'aéronef à voilure tournante ou encore à la masse du carburant présent dans les réservoirs. La partie de l'organe principal, saillant du logement de l'atterrisseur d'urgence lorsque cet organe principal est déployé, s'étend alors à l'extérieur du logement sur une longueur variable en fonction desdites informations avioniques. Ce dispositif vise principalement à adapter la longueur déployée aux longueurs prévues sur les atterrisseurs basiques dans les conditions de chargement du moment.

Selon un premier mode de réalisation, l'atterrisseur d'urgence est du type atterrisseur d'urgence rotatif. L'organe principal est alors fixé à l'aéronef à voilure tournante par une articulation, cette articulation permettant à l'organe principal d'effectuer une rotation.

Durant un mode de fonctionnement normal, l'organe principal est maintenu sensiblement selon une direction dite horizontale dans un logement. Durant un mode de fonctionnement de secours, le moyen de déploiement libère l'organe principal qui effectue une rotation pour parvenir à une position sensiblement verticale.

Selon un deuxième mode de réalisation, l'atterrisseur d'urgence comporte un organe secondaire dans lequel coulisse la première extrémité de l'organe principal. L'atterrisseur d'urgence est alors un atterrisseur d'urgence télescopique.

Durant le mode de fonctionnement normal, l'organe principal est rétracté à l'intérieur de l'organe secondaire. Par contre, durant le mode de fonctionnement de secours, l'organe principal effectue une translation par rapport à l'organe secondaire pour saillir à l'extérieur de l'organe secondaire et du logement accueillant l'atterrisseur de secours.

Optionnellement, la première extrémité est pourvue d'un premier épaulement et d'un deuxième épaulement qui coopèrent avec une périphérie interne de l'organe secondaire. Ces épaulements ont notamment pour but d'assurer une bonne stabilité de l'organe principal à l'intérieur de l'organe secondaire et de conférer à l'atterrisseur d'urgence une résistance en flexion suffisante pour supporter l'aéronef à voilure tournante.

On note que l'on usine le premier épaulement et le deuxième épaulement en prévoyant des tolérances de fabrication garantissant le coulissement de l'organe principal dans l'organe secondaire et la reprise des moments de flexion et des contraintes résultantes.

De plus, l'organe secondaire s'étendant d'une première zone extrémale vers une deuxième zone extrémale, la deuxième zone extrémale peut être pourvue d'une butée traversée par l'organe principal lorsque cet organe principal est déployé hors d'un logement dans un mode de fonctionnement d'urgence, la butée coopérant avec le deuxième épaulement pour limiter une translation de l'organe principal par rapport à l'organe secondaire. L'extension de l'organe principal par rapport à l'organe secondaire est alors limitée par la coopération de la butée avec le deuxième épaulement, à savoir l'épaulement de l'organe principal le plus proche de cette butée. La butée est par exemple un bouchon vissé sur la deuxième zone extrémale.

On note qu'un troisième mode de réalisation résulte de la combinaison du premier mode de réalisation et du deuxième mode de réalisation. Dès lors, l'organe secondaire prévu par le deuxième mode de réalisation est fixé à l'aéronef à voilure tournante par l'articulation prévue dans le cadre du premier mode de réalisation, cette articulation permettant à l'organe secondaire d'effectuer une rotation. L'atterrisseur d'urgence est alors un atterrisseur d'urgence télescopique et rotatif.

Par ailleurs, le moyen de maintien comporte optionnellement au moins un loquet coopérant avec la première extrémité pour bloquer l'organe principal lorsque cet organe principal est déployé hors du logement dans lequel est agencé l'atterrisseur.

Additionnellement, le moyen de maintien peut comporter un moyen de déplacement élastique tendant à faire pénétrer chaque loquet à l'intérieur de l'organe secondaire pour bloquer l'organe principal dans une position.

Le loquet peut à cet effet réaliser un mouvement rotatif ou une translation par exemple.

Optionnellement, l'atterrisseur d'urgence escamotable est agencé dans la case de train de l'atterrisseur basique correspondant.

L'invention et ses avantages apparaîtront avec plus de détails dans le cadre de la description qui suit avec des exemples de réalisation donnés à titre illustratif en référence aux figures annexées qui représentent :
- la figure 1, un schéma montrant un aéronef à voilure tournante muni d'un atterrisseur d'urgence déployé.
- les figures 2 et 3, des schémas explicitant un premier mode de réalisation,
- les figures 4 et 5, des schémas explicitant une première variante préférée d'un deuxième mode de réalisation,
- les figures 6 à 9, des schémas explicitant une deuxième variante préférée d'un deuxième mode de réalisation, et
- la figure 10, un schéma présentant un troisième mode de réalisation.

Les éléments présents dans plusieurs figures distinctes sont affectés d'une seule et même référence.

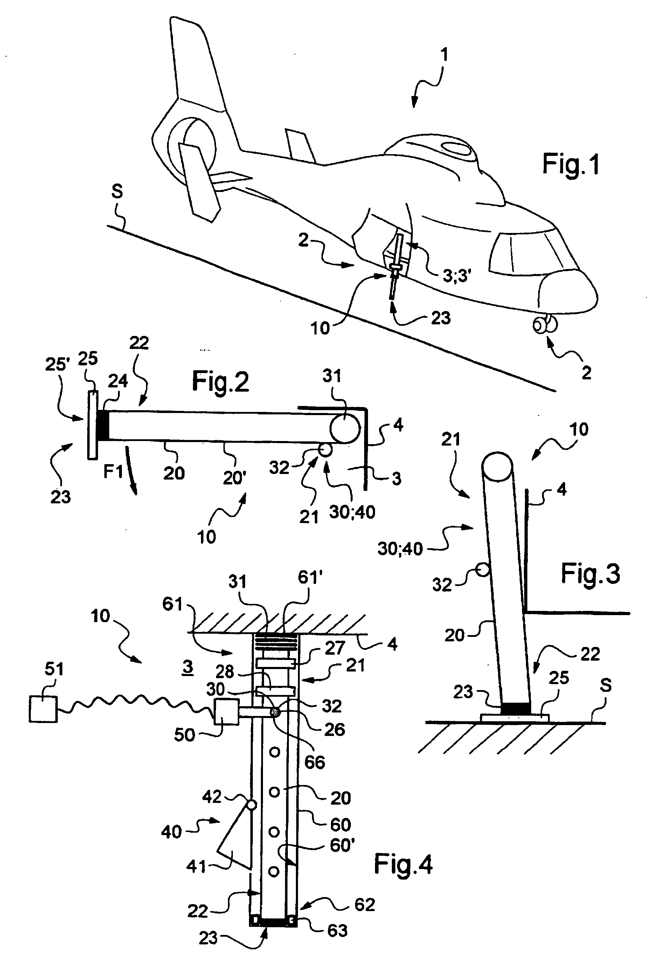

La figure 1 présente un aéronef à voilure tournante 1, à savoir un giravion de type hélicoptère.

Afin de reposer sur un sol S, l'aéronef à voilure tournante est équipé d'un train d'atterrissage pourvu de trois atterrisseurs basiques 2 à roues rétractables, deux atterrisseurs basiques principaux non visibles sur la figure 1 pour ne pas surcharger cette figure 1 et un atterrisseur basique secondaire disposé à l'avant de l'aéronef à voilure tournante 1. Chaque atterrisseur basique 2 est agencé dans une case de train 3.

Durant un mode de fonctionnement normal, un pilote déploie chaque atterrisseur basique 2 hors de sa case de train 3' préalablement à l'atterrissage, et escamote en vol chaque atterrisseur basique 2 dans sa case de train 3' pour limiter la traînée aérodynamique de l'aéronef à voilure tournante 1. Par ailleurs, l'aéronef à voilure tournante comporte au moins un atterrisseur d'urgence 10 escamotable disposé dans un logement 3 de l'aéronef à voilure tournante, et avantageusement un atterrisseur d'urgence 10 par atterrisseur basique 2 disposé dans la case de train 3' de l'atterrisseur basique 2 que l'atterrisseur d'urgence est amené à suppléer dans un mode de fonctionnement de secours.

Ainsi, si le moyen de déploiement principal d'un atterrisseur basique ne fonctionne pas, on utilise éventuellement un moyen de déploiement secondaire pour sortir l'atterrisseur basique de la case de train. Par exemple, le moyen de déploiement secondaire est une pompe manuelle alimentant un actionneur hydraulique.

S'il s'avère impossible de déployer un atterrisseur basique, on met en oeuvre un mode de fonctionnement d'urgence. Durant ce mode de fonctionnement d'urgence, on sort de son logement l'atterrisseur d'urgence 10 correspondant à l'atterrisseur basique bloqué pour pallier la panne constatée.

L'atterrisseur d'urgence 10 peut selon la version être déployé manuellement par un opérateur présent dans l'aéronef à voilure tournante, ou encore être déployé par un dispositif apte à être activé par un système actif ou à distance par le pilote par exemple.

On comprend que l'on entend par déploiement d'un atterrisseur, basique ou d'urgence, le déploiement au moins partiel de cet atterrisseur hors de son logement. En effet, une partie de l'atterrisseur peut rester dans son logement alors qu'une autre partie destinée à être en contact avec le sol saille de ce logement à l'extérieur de l'aéronef à voilure tournante.

Les figures 2 à 3 présentent un atterrisseur d'urgence 10 selon un premier mode de réalisation, cet atterrisseur d'urgence 10 étant escamoté dans un logement 3 d'un aéronef à voilure tournante 1 sur la figure 2 et étant déployé pour saillir partiellement de ce logement 3 sur la figure 3.

Indépendamment du mode de réalisation, l'atterrisseur d'urgence 10 comprend un organe principal 20 destiné à être en contact avec le sol S durant un mode de fonctionnement d'urgence, l'organe principal 20 s'étendant d'une première extrémité 21 vers une deuxième extrémité 22. Cet organe principal 20 est un organe principal allongé tel qu'un tube, dénommé tube principal par commodité, mais peut avoir une toute autre forme.

De plus, cet atterrisseur d'urgence 10 est équipé d'un moyen de déploiement 30 pour maintenir l'organe principal 20 dans le logement 3 durant un mode de fonctionnement normal, et pour autoriser le déploiement de l'organe principal 20 hors du logement 3 durant le mode de fonctionnement d'urgence afin que l'organe principal 20 puisse pallier la défaillance de l'atterrisseur basique associé.

En outre, l'atterrisseur d'urgence 10 comprend un moyen de maintien 40 pour bloquer l'organe principal 20 dans une position préétablie par le constructeur lorsque cet organe principal 20 est déployé.

De plus, lorsque l'atterrisseur d'urgence 10 est déployé, la partie destinée à être en contact avec le sol et saillant du logement 3 à l'extérieur de l'aéronef à voilure tournante est éventuellement munie d'un organe de contact 23 avec le sol S. Plus précisément, l'organe de contact 23 est fixé à la deuxième extrémité 22 de l'organe principal 20. On note que l'organe de contact peut être intégré à la deuxième extrémité 22 en constituant la partie extrémale de cette deuxième extrémité 22.

L'organe de contact peut être réalisé à l'aide d'un matériau faisant partie de la classe des élastomères par exemple.

Selon la variante, l'organe principal 20 peut posséder un moyen d'amortissement 24 ayant une raideur du même ordre de grandeur que la raideur d'un atterrisseur basique classique, à savoir entre 5 et 500 daN/mm (décaNewton par millimètre) pour un hélicoptère suivant le type d'appareil.

Ce moyen d'amortissement peut de plus lier l'organe de contact 23 à la partie extrémale de la deuxième extrémité 22, en comportant un ressort par exemple lié d'une part à ladite partie extrémale et d'autre part à l'organe de contact 23.

De plus, il est à noter que l'organe de contact 23 peut posséder une spatule 25 afin de maximiser la surface de contact 25' de l'organe de contact 23 avec le sol S. De plus, la spatule permet d'utiliser l'atterrisseur d'urgence aussi bien sur des surfaces dures non déformables que sur des surfaces meubles déformables. A titre de variante non représentée sur une figure, l'organe de contact peut être une roue.

Par ailleurs, le moyen de déploiement 30 comporte au moins une goupille 32 qui coopère avec l'organe principal 20 pour le bloquer dans le logement 3 de l'atterrisseur d'urgence 10 durant le mode de fonctionnement normal et pour autoriser le déploiement de l'organe principal 20 durant un mode de fonctionnement d'urgence.

Pour faciliter le déploiement, le moyen de déploiement 30 comporte un organe de déploiement 31 élastique exerçant un effort sur l'organe principal 20 pour faciliter son déplacement hors du logement 3.

Enfin, le moyen de maintien 40 peut comporter la goupille 32 du moyen de déploiement.

En référence à la figure 2 selon le premier mode de réalisation, l'organe principal 20 est articulé à un cadre fort 4 de l'aéronef à voilure tournante, via une articulation autorisant un mouvement rotatif à cet organe principal 20. Le moyen de déploiement 31 est alors éventuellement muni d'un ressort disposé autour de cette articulation pour favoriser la rotation de l'organe principal 20.

La goupille 32 du moyen de déploiement 30 coopère alors avec une périphérie externe 20' de l'organe principal 20 pour le maintenir à l'intérieur du logement 3. Cette goupille 32 peut être enfichée dans un orifice de l'aéronef à voilure tournante 1. Il est à noter que cette goupille 32 pourrait traverser l'organe principal 20 à cet effet.

Durant le mode de fonctionnement d'urgence, on enlève la goupille 32. Il en résulte un mouvement rotatif de l'organe principal 20 selon la flèche F1.

En référence à la figure 3, on remet la goupille 32 à son emplacement d'origine. L'organe principal 20. est alors coincé entre cette goupille 32 et le cadre fort 4. Par conséquent, la goupille 32 représente bien un moyen de maintien de l'organe principal 20 en position « atterrisseur déployé».

En référence à la figure 4, selon un deuxième mode de réalisation, on déploie l'organe principal par le biais d'un mouvement non pas rotatif mais translatif.

L'organe principal 20 est en effet agencé dans un organe secondaire 60 allongé, la première extrémité 21 de l'organe principal 20 pouvant coulisser à l'intérieur de l'organe secondaire 60. Cet organe secondaire 60 s'étend d'une première zone extrémale 61 fixée à un cadre fort 4 de l'aéronef à voilure tournante vers une deuxième zone extrémale 62. L'organe secondaire est éventuellement un tube secondaire creux.

La première extrémité de l'organe principal 20 peut comporter un premier épaulement 27 et un deuxième épaulement 28 qui coopèrent avec la périphérie interne 60' de l'organe secondaire 60 creux.

Par suite, la seconde zone extrémale 62 comporte une butée 63 limitant l'extension de l'organe principal 20 à l'extérieur de l'organe secondaire 60 en bloquant le deuxième épaulement 28. Cette butée 63 peut être réalisée à l'aide d'un bouchon comportant un orifice central apte à être traversé par l'organe principal 20, ce bouchon étant vissé sur la deuxième zone extrémale 62.

Le moyen de déploiement de l'atterrisseur d'urgence 10 comprend une goupille 32 qui traverse à minima un orifice secondaire 66 de l'organe secondaire puis un orifice principal 26 de l'organe principal 20.

Il est à noter que l'organe secondaire 60 peut comporter une pluralité d'orifices secondaires 66 répartis selon une direction axiale de cet organe secondaire 60.

En fonction de l'orifice secondaire 66 perforé par la goupille 32, l'organe principal 20 saille plus ou moins de l'organe secondaire 60. A l'inverse, on peut prévoir un orifice secondaire 66 disposé dans la deuxième zone extrémale 62 et une pluralité d'orifices primaires ménagés axialement dans l'organe primaire 20.

Par ailleurs, la goupille 32 peut être déplacée par un opérateur.

Toutefois, conformément, à la version représentée sur la figure 4, l'atterrisseur d'urgence 10 peut posséder un moyen de déplacement 50 du moyen de déploiement 30 et un organe de commande 51 dudit moyen de déplacement 50.

Le moyen de déplacement peut être un moyen électromagnétique ou encore un moteur coopérant avec une goupille 32 filetée par exemple. L'organe de commande 51 est soit un bouton manoeuvrable par un opérateur soit un processeur requérant le déploiement de l'organe principal 20 hors de l'organe secondaire 60 et du logement 3 en fonction d'informations provenant de capteurs dédiés.

Il est possible de prévoir une pluralité de goupilles coopérant chacune avec un orifice secondaire, chaque goupille étant associée à un moyen de déplacement.

Par ailleurs, le moyen de déploiement schématisé possède un organe de déploiement 31 élastique tel qu'un ressort agencé entre la première extrémité 21 de l'organe principal 20 et un socle 61' de la première zone extrémale 61. Le ressort est alors comprimé durant le mode de fonctionnement normal.

En outre, le moyen de maintien comporte au moins un loquet 41 coopérant avec la première extrémité 21 pour bloquer l'organe principal 20 lorsque cet organe principal 20 est déployé hors du logement 3. Un moyen de déplacement 42 élastique tend à faire pénétrer chaque loquet 41 à l'intérieur de l'organe secondaire via une lumière ménagée dans l'organe secondaire 60.

Selon la première variante du deuxième mode de réalisation, le loquet 41 est une plaque triangulaire articulée par une articulation élastique 42 à l'organe secondaire 60.

Durant un mode de fonctionnement d'urgence, on enlève la goupille 32 pour libérer l'organe principal 20.

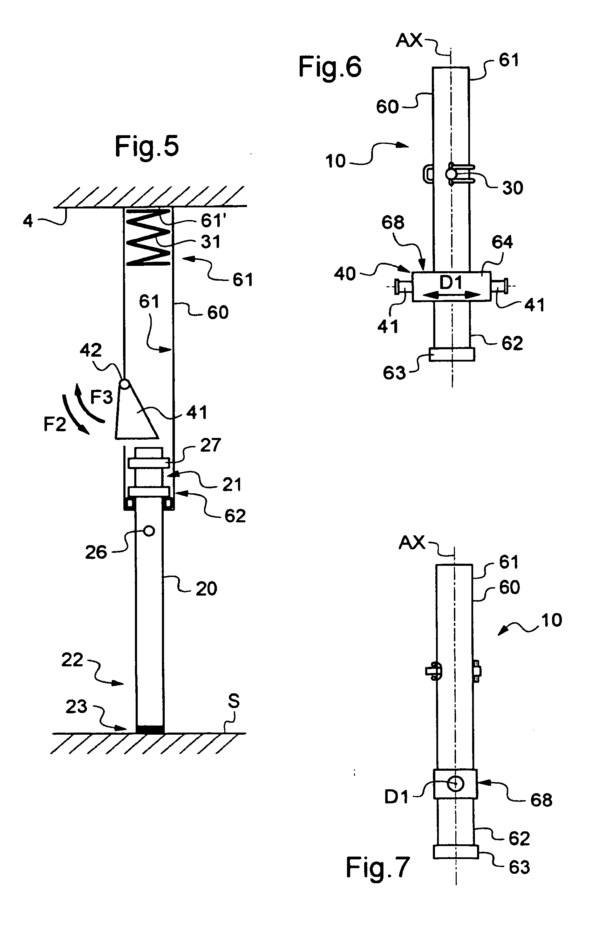

En référence à la figure 5, l'organe de déploiement 31 se détend et exerce un effort sur l'organe principal 20 qui coulisse dans l'organe secondaire 60. Il est à noter qu'un opérateur peut aussi faire coulisser l'organe secondaire manuellement.

La translation de l'organe principal 20 dans l'organe secondaire 60 est stoppée par la butée 63 lorsque le deuxième épaulement 28 entre en contact avec cette butée 63.

De plus, le loquet 41 effectue un mouvement rotatif selon la flèche F2 et pénètre partiellement dans l'organe secondaire 60. Ainsi, l'organe principal 20 ne peut plus remonter à sa position initiale, du moins sans une intervention consistant à déplacer le loquet 41 selon la flèche F3.

Les figures 6 à 9 présentent une deuxième variante du deuxième mode de réalisation selon laquelle chaque loquet 41 effectue non pas un mouvement rotatif mais un mouvement de translation.

Selon cette deuxième variante, chaque loquet 41 est disposé dans une saillie radiale 68 de l'organe secondaire 60. L'organe secondaire 60 s'étendant selon un axe médian AX, chaque loquet est à même d'effectuer un mouvement translatif selon une direction D1 sensiblement perpendiculaire à l'axe médian AX.

Plus particulièrement, l'atterrisseur d'urgence 10 schématisé présente deux loquets 41, disposés de manière symétrique par rapport à l'axe médian AX.

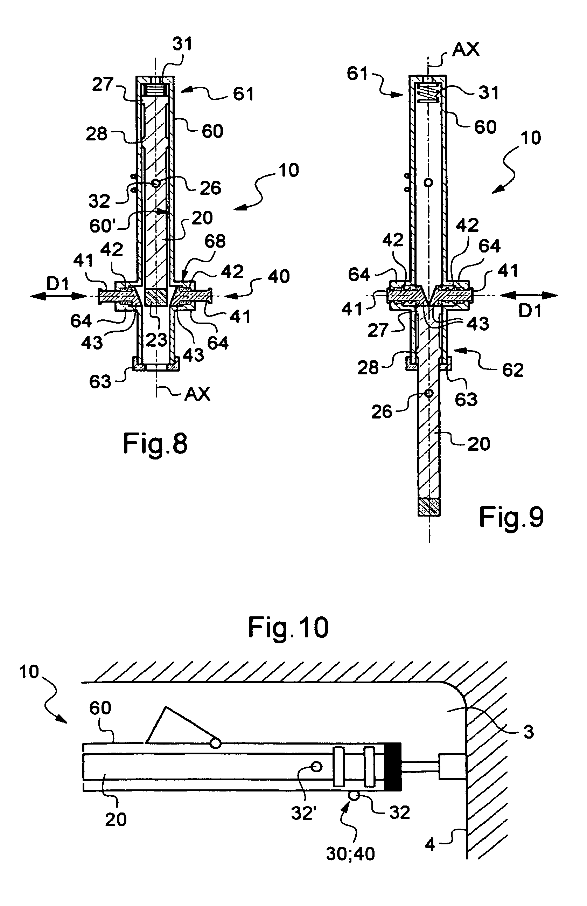

Conformément à la figure 8, durant le mode de fonctionnement normal, un organe de déploiement élastique 42 pousse chaque loquet 41 contre l'organe principal 20, et notamment son organe de contact 23. Une goupille 32 maintient l'organe principal 20 dans l'organe secondaire 60.

En référence à la figure 9, durant un mode de fonctionnement d'urgence, on enlève la goupille 32 pour libérer l'organe principal 20. L'organe de déploiement 31 se détend et exerce un effort sur l'organe principal 20 qui coulisse dans l'organe secondaire 60. La translation de l'organe principal 20 dans l'organe secondaire 60 est alors stoppée par la butée 63 lorsque le deuxième épaulement 28 entre en contact avec cette butée 63.

De plus, chaque loquet 41 effectue un mouvement de translation selon la direction D1 et pénètre à l'intérieur de l'organe secondaire 60. Une surface inférieure 43 de chaque loquet 41 bloque alors la première extrémité 21. Ainsi, l'organe principal 20 ne peut plus remonter à sa position initiale, du moins sans une intervention extérieure.

Enfin, la figure 10 présente un troisième mode de réalisation, résultant d'une combinaison des premier et deuxième modes de réalisation décrits précédemment.

L'atterrisseur d'urgence comprend alors un organe principal 20 coulissant dans un organe secondaire 60, une première goupille 32' d'un moyen de déploiement maintenant l'organe principal 20 dans l'organe secondaire 60.

De plus, cet organe secondaire 60 est articulé à un cadre fort 4 afin de pouvoir faire un mouvement rotatif. Dès lors, le moyen de déploiement comprend une deuxième goupille 32 qui coopère avec la périphérie externe de l'organe secondaire 60.

Pour déployer l'organe principal, on enlève successivement la première goupille puis la deuxième goupille, ou inversement.

Il est à noter qu'il est concevable d'utiliser une unique goupille qui traverse un élément structural de l'aéronef à voilure tournante, l'organe secondaire 60 et l'organe principal 20.

Naturellement, la présente invention est sujette à de nombreuses variations quant à sa mise en oeuvre, pourvu que ces variations restent dans les limites conférées par le texte des revendications.

## Revendications

1. Aéronef à voilure tournante (1) muni d'au moins un atterrisseur basique (2) escamotable dans une case de train (3'),
**caractérisé en ce qu'**il comporte un atterrisseur d'urgence (10) d'aéronef (1) pour pallier une panne dudit atterrisseur basique (2) d'un aéronef à voilure tournante (1), ledit atterrisseur d'urgence (10) ayant un organe principal (20) s'étendant d'une première extrémité (21) à une deuxième extrémité (22), ledit atterrisseur d'urgence (10) ayant un moyen de déploiement (30) de l'organe principal (20) pour déployer cet organe principal (20) hors d'un logement (3) afin de suppléer un atterrisseur basique (2) d'un aéronef à voilure tournante (1) en cas de panne, ledit atterrisseur d'urgence (10) étant pourvu d'un moyen de maintien (40) en position pour bloquer ledit organe principal (20) lorsque cet organe principal (20) est déployé hors dudit logement (3), ledit moyen de déploiement (30) comportant un organe de déploiement (31) élastique agissant sur ledit organe principal (20) pour déployer cet organe principal (20) hors du logement (3) afin de suppléer l'atterrisseur basique (2) en cas de panne.

2. Aéronef selon la revendication 1,
**caractérisé en ce que**, ledit organe principal (20) comporte un organe de contact (23) avec le sol (S).

3. Aéronef selon la revendication 2,
**caractérisé en ce que** ledit organe principal (20) est pourvu d'un moyen d'amortissement (24).

4. Aéronef selon l'une quelconque des revendications 2 à 3, **caractérisé en ce que** ledit organe de contact (23) comporte une spatule (25) pour maximiser une surface de contact (25') de l'atterrisseur d'urgence (10) avec le sol (S).

5. Aéronef selon l'une quelconque des revendications 2 à 3,
**caractérisé en ce que** ledit organe de contact (23) comporte une roue.

6. Aéronef selon l'une quelconque des revendications précédentes,
**caractérisé en ce que** ledit moyen de déploiement (30) comporte une goupille (32) coopérant avec ledit organe principal (20) pour maintenir cet organe principal (20) dans un logement (3) durant un mode de fonctionnement normal et pour autoriser le déploiement de cet organe principal (20) hors dudit logement (3) durant un mode de fonctionnement de secours afin de suppléer un atterrisseur basique (2) d'un aéronef à voilure tournante (1) en cas de panne.

7. Aéronef selon la revendication 6,
**caractérisé en ce que** ledit moyen de maintien (40) comporte ladite goupille (32) qui coopère avec ledit organe principal (20) pour maintenir cet organe principal (20) hors d'un logement, suite audit déploiement.

8. Aéronef selon l'une quelconque des revendications précédentes,
**caractérisé en ce que** ledit atterrisseur d'urgence comporte un moyen de déplacement (50) dudit moyen de déploiement (30) et un organe de commande (51) dudit moyen de déplacement (50), ledit organe de commande (51) ordonnant au moyen de déplacement (50) de déplacer ledit moyen de déploiement (30) pour le déploiement dudit organe principal (20) hors d'un logement.

9. Aéronef selon l'une quelconque des revendications précédentes,
**caractérisé en ce que** ledit atterrisseur d'urgence comporte un organe secondaire (60) dans lequel coulisse ladite première extrémité (21) dudit organe principal (20).

10. Aéronef selon la revendication 9,
**caractérisé en ce que** ladite première extrémité (21) est pourvue de d'un premier épaulement (27) et d'un deuxième épaulement (28) qui coopèrent avec une périphérie interne (60') dudit organe secondaire (60).

11. Aéronef selon l'une quelconque des revendications 9 à 10,
**caractérisé en ce que**, ledit organe secondaire (60) s'étendant d'une première zone extrémale (61) vers une deuxième zone extrémale (62), ladite deuxième zone extrémale (62) est pourvue d'une butée (63) traversée par ledit organe principal (20) lorsque l'organe principal (20) est déployé hors d'un logement (3) dans un mode de fonctionnement d'urgence, ladite butée (63) coopérant avec ledit deuxième épaulement (28) pour limiter une translation dudit organe principal (20) par rapport audit organe secondaire (60).

12. Aéronef selon l'une quelconque des revendications 9 à 11,
**caractérisé en ce que** ledit moyen de maintien (40) comporte au moins un loquet (41) coopérant avec ladite première extrémité (21) pour bloquer ledit organe principal (20) lorsque cet organe principal (20) est déployé hors dudit logement (3).

13. Aéronef selon la revendication 12,
**caractérisé en ce que** ledit moyen de maintien (40) comporte un moyen de déplacement (42) élastique tendant à faire pénétrer ledit loquet (41) à l'intérieur dudit organe secondaire (60).

14. Aéronef selon l'une quelconque des revendications 1 à 13,
**caractérisé en ce que** ledit atterrisseur d'urgence (10) escamotable est agencé dans ladite case de train (3').

## Claims

1. Rotary wing aircraft (1) provided with at least one basic undercarriage (2) retractable into a landing-gear bay (3'),
**characterised in that** it comprises an aircraft (1) emergency undercarriage (10) for mitigating a failure of said basic undercarriage (2) of a rotary wing aircraft (1), said emergency undercarriage (10) having a main member (20) extending from a first end (21) to a second end (22), said emergency undercarriage (10) having a deployment means (30) for the main member (20) for deploying said main member (20) out from a housing (3) in order to take over from a basic undercarriage (2) of a rotary wing aircraft (1) in the event of a failure, said emergency undercarriage (10) being provided with a holding means (40) for holding it in position to block said main member (20) when said main member (20) is deployed out from said housing (3), said deployment means (30) comprising a flexible deployment member (31) acting on said main member (20) to deploy said main member (20) out from the housing (3) in order to take over from the basic undercarriage (2) in the event of a failure.

2. Aircraft according to Claim 1,
**characterised in that** said main member (20) comprises a contact member (23) for making contact with the ground (S).

3. Aircraft according to Claim 2,
**characterised in that** said main member (20) is provided with a damping means (24).

4. Aircraft according to any one of Claims 2 to 3,
**characterised in that** said contact member (23) comprises a foot (25) for maximising a contact area (25') of the emergency undercarriage (10) with the ground (S).

5. Aircraft according to any one of Claims 2 to 3,
**characterised in that** said contact member (23) comprises a wheel.

6. Aircraft according to any one of the preceding claims,
**characterised in that** said deployment means (30) comprises a pin (32) cooperating with said main member (20) to hold said main member (20) in a housing (3) during a normal mode of operation, and to allow said main member (20) to be deployed out from said housing (3) during an emergency mode of operation in order to take over from a basic undercarriage (2) of a rotary wing aircraft (1) in the event of a failure.

7. Aircraft according to Claim 6,
**characterised in that** said holding means (40) comprises said pin (32) which cooperates with said main member (20) to hold said main member (20) outside a housing, after said deployment.

8. Aircraft according to any one of the preceding claims,
**characterised in that** said emergency undercarriage comprises a displacement means (50) for displacing said deployment means (30) and a control member (51) for controlling said displacement means (50), said control member (51) causing the displacement means (50) to displace said deployment means (30) in order to deploy said main member (20) out from a housing.

9. Aircraft according to any one of the preceding claims,
**characterised in that** said emergency undercarriage comprises a secondary member (60) in which said first end (21) of said main member (20) slides.

10. Aircraft according to Claim 9,
**characterised in that** said first end (21) is provided with a first shoulder (27) and with a second shoulder (28) which cooperate with an inside periphery (60') of said secondary member (60).

11. Aircraft according to any one of Claims 9 to 10,
**characterised in that** said secondary member (60) extends from a first end zone (61) to a second end zone (62), said second end zone (62) is provided with an abutment (63) through which said main member (20) passes when the main member (20) is deployed out from a housing (3) in an emergency mode of operation, and said abutment (63) cooperates with said second shoulder (28) to limit a translation of said main member (20) relative to said secondary member (60).

12. Aircraft according to any one of Claims 9 to 11,
**characterised in that** said holding means (40) comprises at least one latch (41) cooperating with said first end (21) to block said main member (20) when said main member (20) is deployed out from said housing (3).

13. Aircraft according to Claim 12,
**characterised in that** said holding means (40) comprises a flexible displacement means (42) urging said latch (41) to penetrate into the inside of said secondary member (60) .

14. Aircraft according to any one of Claims 1 to 13,
**characterised in that** said retractable emergency undercarriage (10) is constructed in said landing-gear bay (3').

## Patentansprüche

1. Hubschrauber (1) mit mindestens einem Basisfahrgestell (2), welches in ein Fahrgestellgehäuse (3') einfahrbar ist,
**dadurch gekennzeichnet, dass** der Hubschrauber (1) ein Luftfahrzeug-Notfahrgestell (10) aufweist, um einen Defekt des Basisfahrgestells (2) des Hubschraubers (1) auszugleichen, wobei das Notfahrgestell (10) ein Hauptorgan (20) aufweist, das sich von einem ersten Ende (21) bis zu einem zweiten Ende (22) erstreckt, wobei das Notfahrwerk (10) ein Mittel zum Ausfahren (30) des Hauptorgans (20) aufweist zum Ausfahren dieses Hauptorgans (20) aus einer Lagerung (30), um ein Basisfahrgestell (2) eines Hubschraubers (1) im Fall eines Defektes zu ersetzen, wobei das Notfahrgestell (10) mit einem Mittel (40) zum In-Stellung-Halten versehen ist, um das Hauptorgan (20) zu blockieren, wenn dieses Hauptorgan (20) aus dem Lager (30) ausgefahren ist, wobei das Ausfahrmittel (30) ein elastisches Ausfahrorgan (31) aufweist, welches auf das Hauptorgan (20) wirkt, um das Hauptorgan (20) aus dem Lager (3) auszufahren, um das Basisfahrgestell (2) im Falle eines Defektes zu ersetzen.

2. Hubschrauber nach Anspruch 1,
**dadurch gekennzeichnet, dass** das Hauptorgan (20) ein Organ (23) zum Kontakt mit dem Boden (S) aufweist.

3. Hubschrauber nach Anspruch 2,
**dadurch gekennzeichnet, dass** das Hauptorgan (20) mit einer Federung (24) versehen ist.

4. Hubschrauber nach einem der Ansprüche 2 bis 3,
**dadurch gekennzeichnet, dass** das Kontaktorgan (23) eine Schaufel (25) aufweist zum Maximieren einer Kontaktfläche (25') des Notfahrwerks (10) mit dem Boden (S).

5. Hubschrauber nach einem der Ansprüche 2 bis 3,
**dadurch gekennzeichnet, dass** das Kontaktorgan (23) ein Rad aufweist.

6. Hubschrauber nach einem der vorstehenden Ansprüche,
**dadurch gekennzeichnet, dass** das Ausfahrmittel (30) einen Stift (32) aufweist, der mit dem Hauptorgan (20) zusammenwirkt, um dieses Hauptorgan (20) in einem Lager (3) während eines normalen Betriebszustands zu halten, und um das Ausfahren des Hauptorgans (20) aus diesem Lager (3) während eines Notbetriebszustands zu erlauben, um im Falle eines Defektes das Basisfahrwerk (2) des Hubschraubers (1) zu ersetzen.

7. Hubschrauber nach Anspruch 6,
**dadurch gekennzeichnet, dass** die Haltemittel (40) den Stift (32) aufweisen, der mit dem Hauptorgan (20) zusammenwirkt, um dieses Hauptorgan (20) außerhalb des Lagers nach dessen Ausfahren zu halten.

8. Hubschrauber nach einem der vorstehenden Ansprüche,
**dadurch gekennzeichnet, dass** das Notfahrwerk ein Mittel (50) zum Bewegen des Ausfahrmittels (30) und ein Steuerorgan (51) des Bewegungsmittels (50) aufweist, wobei das Steuerorgan (51) dem Bewegungsmittel (50) den Befehl gibt, das Ausfahrmittel (30) für das Ausfahren des Hauptorgans (20) aus einem Lager zu bewegen.

9. Hubschrauber nach einem der vorstehenden Ansprüche,
**dadurch gekennzeichnet, dass** das Notfahrwerk ein sekundäres Organ (60) aufweist, in dem das erste Ende (21) des Hauptorgans (20) gleitet.

10. Hubschrauber nach Anspruch 9,
**dadurch gekennzeichnet, dass** das erste Ende (21) mit einer ersten Schulter (27) und mit einer zweiten Schulter (28) versehen ist, die mit einem Innenrand (60') des sekundären Organs (60) zusammenwirken.

11. Hubschrauber nach einem der Ansprüche 9 bis 10,
**dadurch gekennzeichnet, dass** das sekundäre Organ (60) sich von einem ersten Endbereich (61) bis zu einem zweiten Endbereich (62) erstreckt, wobei der zweite Endbereich (62) mit einem Anschlag (63) versehen ist, der von dem Hauptorgan (20) durchquert wird, wenn das Hauptorgan (20) aus dem Lager (3) in einen Notbetriebszustand ausgefahren ist, wobei der Anschlag (63) mit der zweiten Schulter (28) zusammenwirkt, um eine Translationsbewegung des Hauptorgans (20) relativ zum Sekundärorgan (60) zu begrenzen.

12. Hubschrauber nach einem der Ansprüche 9 bis 11,
**dadurch gekennzeichnet, dass** das Haltemittel (40) mindestens eine Klinke (41) aufweist, die mit dem ersten Ende (21) zusammenwirkt, um das Hauptorgan (20) zu blockieren, wenn dieses Hauptorgan (20) aus dem Lager (3) ausgefahren ist.

13. Hubschrauber nach Anspruch 12,
**dadurch gekennzeichnet, dass** das Haltemittel (40) ein elastisches Bewegungsmittel (42) aufweist, das dazu tendiert, die Klinke (41) in das Innere des sekundären Organs (60) eindringen zu lassen.

14. Hubschrauber nach einem der Ansprüche 1 bis 13,
**dadurch gekennzeichnet, dass** das ausfahrbare Notfahrwerk (10) in dem Fahrwerksgehäuse (3') angeordnet ist.
